# EUROPÄISCHE PATENTSCHRIFT

(11) **EP 0 818 223 B1**
(45) Veröffentlichungstag und Bekanntmachung des Hinweises auf die Patenterteilung: **12.02.2003**
(21) Anmeldenummer: 97111663.7
(22) Anmeldetag: 09.07.1997
(51) Int. Cl.: B01D 1/00, B01D 3/42

(54) **Vorrichtung zum Steuern des Drucks in einer Vakuumkammer einer Destillations- oder Sublimations-Vorrichtung**
Apparatus for controlling the pressure in a vacuum chamber of a distillation or sublimation device
Appareil pour la contrôle de la pression dans une chambre à vide d'un dispositif de distillation ou de sublimation

(30) Priorität: 09.07.1996 DE 19627641
(43) Veröffentlichungstag der Anmeldung: 14.01.1998
(73) Patentinhaber: Plöchinger, Heinz, Dipl.-Ing., 82319 Starnberg (DE)
(72) Erfinder: Plöchinger, Heinz, Dipl.-Ing., 82319 Starnberg (DE)
(74) Vertreter: Schoppe, Fritz, Dipl.-Ing.

(56) Entgegenhaltungen:
- EP-A- 0 097 589
- DE-A- 3 529 956
- DE-A- 3 718 791
- DE-A- 3 743 913
- US-A- 5 137 604

## Beschreibung

Die vorliegende Erfindung bezieht sich auf ein Verfahren und Vorrichtungen zum Steuern des Drucks in einer Vakuumkammer einer Destillations- oder Sublimations-Vorrichtung.

Es ist eine Anzahl von Vorrichtungen bekannt, in denen die Druckabsenkung in bestimmten Abschnitten dieser Vorrichtungen verwendet wird, um bei festgelegten Maximaltemperaturen von Gemischen aus denselben bestimmte Flüssigkeiten, beispielsweise Lösungsmittel oder Wasser, usw., in Dampf-Form oder Gas-Form zu überführen und an einem gekühlten Abscheider zu kondensieren. Derartige Vorrichtungen sind beispielsweise Destillierapparate, Rotationsverdampfer, Vakuum-Zentrifugen, Kurzweg-Verdampfer, Kleinstschritt-Vakuum-Destillatoren, Gefriertrocknungsanlagen, usw..

In derartigen Vorrichtungen muß ein Temperatur-Druck-Gleichgewicht aufrecht erhalten werden, um einerseits ein möglichst rasches, andererseits jedoch ein schonendes Abdampfen zu ermöglichen. Dies wird zunächst durch den Ausgleich der Verdampfungswärme mittels Zufuhr von Heizenergie, um die gewünschte Produkttemperatur zu halten, realisiert. In einigen Fällen wird hierzu auch der Energieinhalt der umgebenden Luft bzw. Strahlungswärme genutzt.

Die Druckabsenkung in den Vakuumkammern derartiger Vorrichtungen auf den gewünschten Siedepunkt, oder Sublimationspunkt, erfolgt mittels einer Vakuumpumpe. Bei einem ungeregelten Betrieb der Vakuumpumpe zum Erzeugen eines bestimmten Drucks in der Vakuumkammer gelangen Wasserdampf und Lösungmittel in die Vakuumpumpe und über dieselbe in die Umwelt. Um dies zu vermeiden, wurde gemäß dem bekannten Stand der Technik der Druck auf den Wert des zugehörigen Siede- bzw. Sublimations-Punktes des Produkts geregelt.

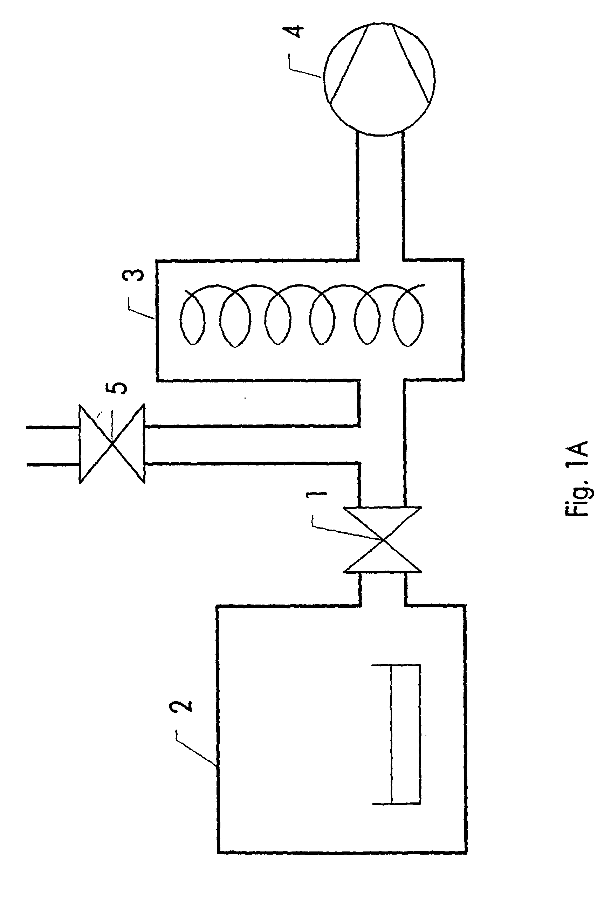

Eine bekannte Vorrichtung, um dies zu erreichen, ist in Fig. 1A dargestellt. Bei der bekannten Vorrichtung ist ein Vakuum-Ventil 1 zwischen einen Produktbehälter 2 und einen gekühlten Abscheider 3 geschaltet. In dem Produktbehälter 2 findet beispielsweise die Verdampfung eines Lösungsmittels aus einem zu destillierenden Produkt statt. Zur Erzeugung eines Vakuums ist eine Vakuumpumpe 4 vorgesehen. Das Vakuum-Ventil 1 wird druckabhängig geöffnet und geschlossen, um den Druck auf den Wert des zugehörigen Siede- bzw. Sublimations-Punktes zu regeln. Zusätzlich wird gemäß der bekannten Vorrichtung ein Belüftungsventil 5 verwendet, um eine Druckkorrektur nach oben durchzuführen, oder um die Anlage nach dem Prozeßende zu belüften.

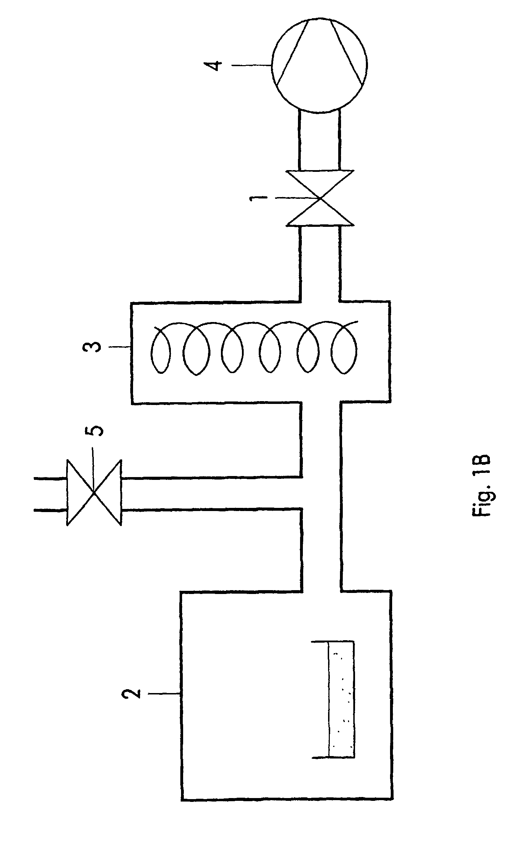

In Fig. 1B ist eine weitere bekannte Vorrichtung ähnlich der von Fig. 1A gezeigt, bei der das Belüftungsventil 5 nicht zwischen dem Vakuum-Ventil 1 und dem gekühlten Abscheider 3, sondern zwischen dem gekühlten Abscheider 3 und der Vakuumpumpe 4 angeordnet ist.

Vorrichtungen gemäß der Fig. 1B werden beispielsweise seit Jahren für Gefriertrocknungsanlagen verwendet. Ferner werden derartige Vorrichtungen für Rotationsverdampfer verwendet, wie in der DE 3718791 gezeigt ist. Das Prinzip, das in Fig. 1B gezeigt ist, ist ferner in der US 5.137.604 zur Anwendung bei Vakuum-Zentrifugen beschrieben.

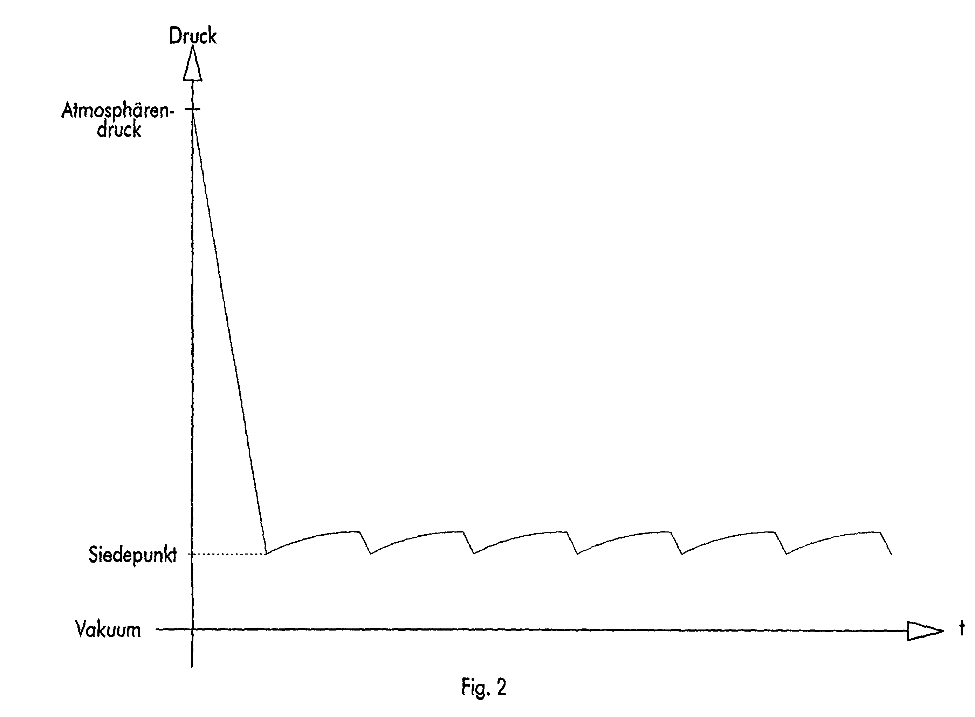

Der Nachteil dieser Anordnungen gemäß dem Stand der Technik besteht prinzipiell darin, daß die Vakuum-Ventile 4 derart dimensioniert werden müssen, daß ein rasches Auspumpen der bei Atmosphärendruck im System enthaltenen Gasmenge möglich ist. Andererseits würde zur Feinregulierung des gewünschten Druckes ein Bruchteil der möglichen Gasdurchflußmenge genügen. Diese Überdimensionierung der Vakuum-Ventile hinsichtlich der Feinregulierung führt bei der Regelung auf den Siede- oder Sublimations-Punktdruck zu relativ großen Druck-Sprüngen. Ein derartiger Druckverlauf ist in Fig. 2 dargestellt. Während des durch die Feinregulierung zwangsläufig notwendigen, zeitweisen Druckanstiegs reduziert sich die Abdampf- bzw. Sublimations-Rate bei bekannten Vorrichtungen. Dadurch dauert der gesamte Prozeß entsprechend länger.

In der EP-A-0097589 ist ein System bekannt, um nicht kondensierbare Stoffe aus einem Verdampfer auszubringen. Eine Verdampfungkammer ist über eine erste Flußstrecke, die ausgelegt ist, um während einer Anlaufperiode ein schnelles Ausbringen der Stoffe zu ermöglichen, und eine zweite Flußstrecke, die ausgelegt ist, um im Normalbetrieb ein Ausbringen abhängig von der Menge an auszubringenen nicht kondensierbaren Stoffen zu ermöglichen. Die erste Flußstrecke ist über ein Ventil verschließbar, während in der zweiten Flußstrecke vorzugsweise ein Plattenventil vorgesehen ist.

Ausgehend von dem genannten Stand der Technik liegt der vorliegenden Erfindung die Aufgabe zugrunde, eine wenig aufwendige Vorrichtung zum Steuern des Drucks in einer Vakuumkammer einer Destillations- oder Sublimations-Vorrichtung zu schaffen, die eine jeweils größtmögliche Abdampfrate ermöglicht.

Diese Aufgabe wird durch eine Vorrichtung gemäß Patentanspruch 1 gelöst.

Bei Bedarf kann eine Heizvorrichtung zum Zuführen von Wärme zu einem Produkt in der Vorrichtung vorgesehen sein.

Die vorliegende Erfindung schafft eine Vorrichtung, die es ermöglicht, Abdampf-, Destillations- und Sublimations-Prozesse derart zu steuern bzw. zu regeln, daß bei definierten Parametern zur Produktschonung eine jeweils größtmögliche Abdampfrate zu erreichen ist. Eine solche größtmögliche Abdampfrate ist durch einen Druckverlauf in der Vakuumkammer einer Destillations- oder Sublimations-Vorrichtung, der durch die Vorrichtung gemäß der vorliegenden Erfindung erzeugt wird, erreichbar.

Gemäß der vorliegenden Erfindung werden nur die nicht kondensierbaren Gase, die über Lecks in das System einströmen, bzw. aus dem Produkt stammen, wobei dieser Anteil meist unerheblich ist, kontinuierlich ausgefördert. Ein ausreichend dimensionierter gekühlter Abscheider nimmt den kondensierbaren Anteil des Gasgemisches, der die weit überwiegende Menge darstellt, als Kondensat auf, welches nach dem Erreichen des Siedepunkts im System vorhanden ist.

Nach dem schnellen Absenken des Drucks in der Vakuumkammer auf den Siede- oder Sublimations-Punktdruck des Produkts wird die Gasdurchflußmenge für die nicht kondensierbaren Gase gerade so dosiert, daß der Druck ausgehend vom zunächst eingestellten Siede- oder Sublimations-Punktdruck rampenartig langsam abnimmt. Ein Unterschreiten eines untersten Drucks oder Minimaldrucks wird dadurch verhindert, daß eine entsprechend kleine Menge an nicht kondensierbaren Gasen über eine Belüftungseinrichtung von außen hinzu dosiert wird.

Bevorzugte Weiterbildungen der vorliegenden Erfindung sind in den abhängigen Ansprüchen definiert.

Bevorzugte Ausführungsbeispiele der vorliegenden Erfindung werden nachfolgend bezugnehmend auf die beiliegenden Zeichnungen näher erläutert. Es zeigen:
- Fig. 1A und 1B: schematische Darstellungen bekannter Drucksteuervorrichtungen;
- Fig. 2: ein Diagramm, das den Druckverlauf in einer Vakuumkammer darstellt, wie er durch eine bekannte Drucksteuervorrichtung gemäß Fig. 1A und 1B erzeugt wird;
- Fig. 3: ein Diagramm, das einen Druckverlauf in einer Vakuumkammer darstellt, der eine optimale Abdampfrate erzeugt;
- Fig. 4: eine schematische Darstellung eines Vergleichsbeispiels für eine Drucksteuervorrichtung gemäß der vorliegenden Erfindung;
- Fig. 5: eine schematische Darstellung eines weiteren Ausführungsbeispiels für eine Drucksteuervorrichtung gemäß der vorliegenden Erfindung;
- Fig. 6: eine schematische Darstellung eines weiteren Ausführungsbeispiels für eine Drucksteuervorrichtung gemäß der vorliegenden Erfindung;
- Fig. 7: eine schematische Darstellung einer Vorrichtung zum Abdampfen für eine Destillations- oder Sublimations-Vorrichtung, in der eine Drucksteuervorrichtung gemäß der vorliegenden Erfindung verwendet wird; und
- Fig. 8: ein Diagramm eines Druckverlaufs, wie er bei einer automatischen Nacheinstellung des Siede- oder Sublimations-Punktes gemäß einem alternativen Ausführungsbeispiel der vorliegenden Erfindung erzeugt wird.

An dieser Stelle sei darauf hingewiesen, daß in den Zeichnungen gleiche Bauteile jeweils mit den gleichen Bezugszeichen bezeichnet sind.

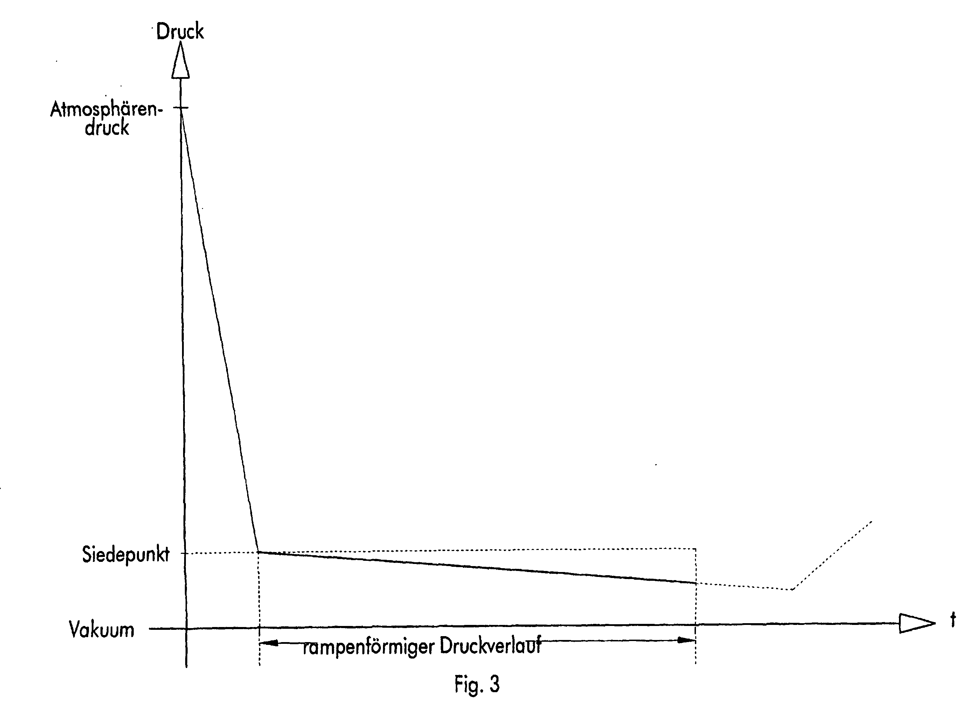

In Fig. 3 ist ein Diagramm dargestellt, das den Druckverlauf zeigt, der gemäß der vorliegenden Erfindung in der Vakuumkammer einer Destillations- oder Sublimations-Vorrichtung erzeugt wird. Dabei wird der Druck in der Vakuumkammer ausgehend von einem Atmosphärendruck mit einer hohen Druckabsenkrate auf einen Siede- oder Sublimations-Punktdruck des zu verarbeitenden Produkts abgesenkt. Nach dem Erreichen des Siedepunktdrucks wird gemäß der vorliegenden Erfindung eine langsame rampenartige Absenkung des Drucks erzeugt. Dieser Druckverlauf nach dem Erreichen des Siedepunkts ermöglicht eine größtmögliche Abdampfung in einer.Destillations- oder Sublimations-vorrichtung.

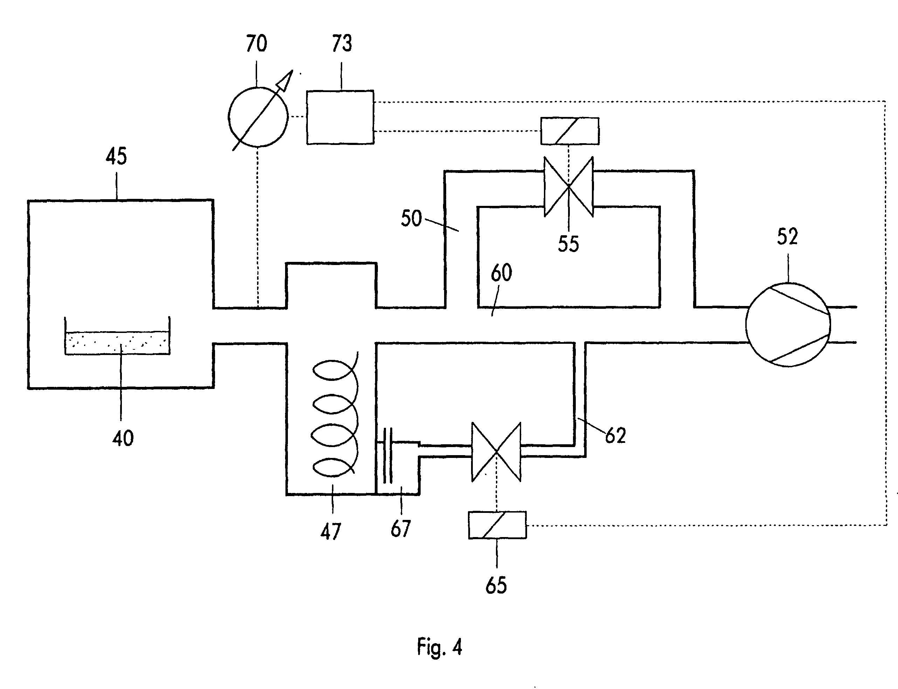

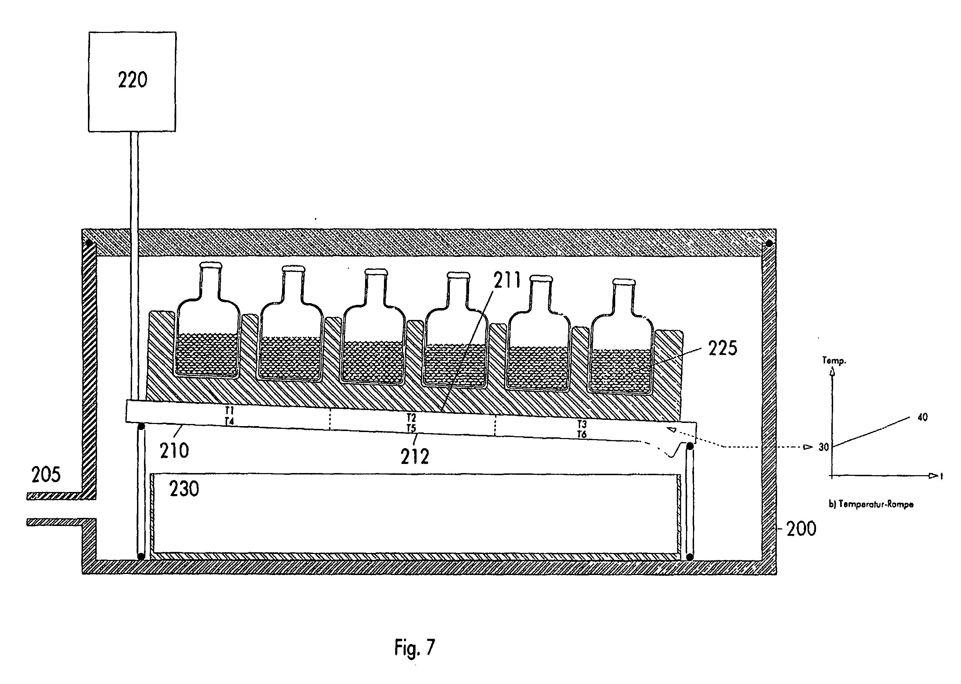

In Fig. 4 ist ein Vergleichsbeispiel dargestellt, das dazu geeignet ist, einen Druckverlauf, wie er in Fig. 3 dargestellt ist, zu erzeugen. In Fig. 4 ist bei 40 schematisch ein Produktbehälter, der ein zu verarbeitendes, d.h. zu destillierendes oder zu sublimierendes, Produkt enthält, dargestellt. Dieser Produktbehälter 40 befindet sich in einer Vakuumkammer 45, in der ferner eine gekühlte Abscheidevorrichtung 47 angeordnet ist. In der Vakuumkammer 45 ist ferner bei Bedarf eine Heizvorrichtung (nicht gezeigt) zum Erwärmen des Produkts angeordnet. Ein bevorzugtes Ausführungsbeispiel der Anordnung der Heizvorrichtung, der gekühlten Abscheidevorrichtung und des Produktbehälters in der Vakuumkammer wird später bezugnehmend auf Fig. 7 näher erläutert.

Die Vakuumkammer 45 ist über eine erste Flußstrecke 50, die einen geringen Flußwiderstand aufweist, mit einer Vakuumpumpe 52 verbunden. In der Flußstrecke 50 ist eine Ventil 55 angeordnet. Die Vakuumkammer 45 ist ferner über eine zweite Flußstrecke 60, die einen verglichen mit dem Flußwiderstand der ersten Flußstrecke hohen Flußwiderstand aufweist, mit der Vakuumpumpe 52 verbunden. Bei dem in Fig. 4 dargestellten Ausführungsbeispiel weist die Drucksteuervorrichtung ferner eine Belüftungsflußstrecke 62 auf, in der ein Ventil 65 angeordnet ist, wobei die Belüftungsflußstrecke 62 einerseits mit der zweiten Flußstrecke 60 und andererseits mit der umgebenden Atmosphäre strömungsmäßig verbunden ist. Die Belüftungseinrichtung in der Form der Belüftungsflußstrecke 62 kann derart ausgebildet sein, daß dieselbe einen Abscheider 67 aufweist, der thermisch mit dem gekühlten Abscheider 47 der Vakuumkammer 45 verbunden ist.

Die Drucksteuervorrichtung gemäß dem in Fig. 4 gezeigten Beispiel weist ferner einen Drucksensor zum Erfassen des in der Vakuumkammer vorliegenden Drucks auf. Dieser Drucksensor 70 ist ferner mit einer Schalteinrichtung 73 verbunden, die wiederum mit den Ventilen 55 und 65 verbunden ist, um dieselben zu öffnen oder zu schließen.

Nachfolgend wird der Betrieb der in Fig. 4 dargestellten Vorrichtung erläutert. Beim Anfahren der Vorrichtung ist das Ventil 55 geöffnet, um durch die Saugwirkung der Vakuumpumpe 52 und den geringen Flußwiderstand der ersten Flußstrecke 50 ein schnelles Absenken des Drucks auf den Siede- oder Sublimations-Punktdruck des zu verarbeitenden Produkts zu erreichen. Wenn der Drucksensor 70 das Erreichen dieses Siedepunktdrucks erfaßt, bewirkt die Schalteinrichtung 73 ein Schließen des Ventils 55, wodurch die Vakuumkammer nur noch durch die zweite Flußstrecke 60, die den hohen Flußwiderstand aufweist, mit der Vakuumpumpe 52 verbunden ist. Diese zweite Flußstrecke oder Widerstandsstrecke 60 dient zum kontinuierlichen Ausfördern der nicht kondensierbaren Gase. Erfaßt der Drucksensor 70 das Erreichen eines festgelegten untersten Druckwertes, der auch mit Minimaldruck bezeichnet wird, bewirkt die Schalteinrichtung 73 ein Öffnen des Belüftungsventils 65, wodurch die Zufuhr von nicht kondensierbaren Gasen über die Widerstandsstrecke 60 ermöglicht wird.

Ist ein Abscheider 67 in der Belüftungsvorrichtung angeordnet, bewirkt derselbe ein Ausfällen von Luftfeuchtigkeit, usw., aus den zugeführten nicht kondensierbaren Gasen, um das Eindringen von Feuchtigkeit in das System zu vermeiden.

Mit der beschriebenen Vorrichtung ist der hauptsächliche Abdampfvorgang im Bereich "rampenförmiger Druckverlauf", siehe Fig. 3, somit ohne unerwünschte Druckschwankungen durchführbar. Dadurch ist eine optimale Abdampfung gewährleistet. Das beschriebene Ausführungsbeispiel ist eine einfache und preisgünstige Vorrichtung für Anlagen, deren Dimensionierung und Produktmengen weitgehend festliegen.

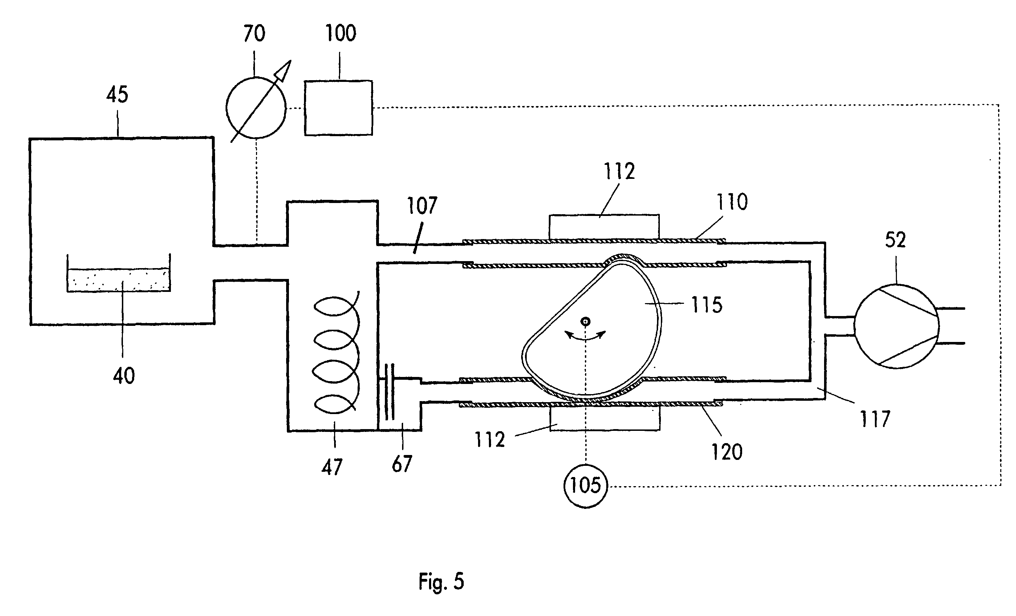

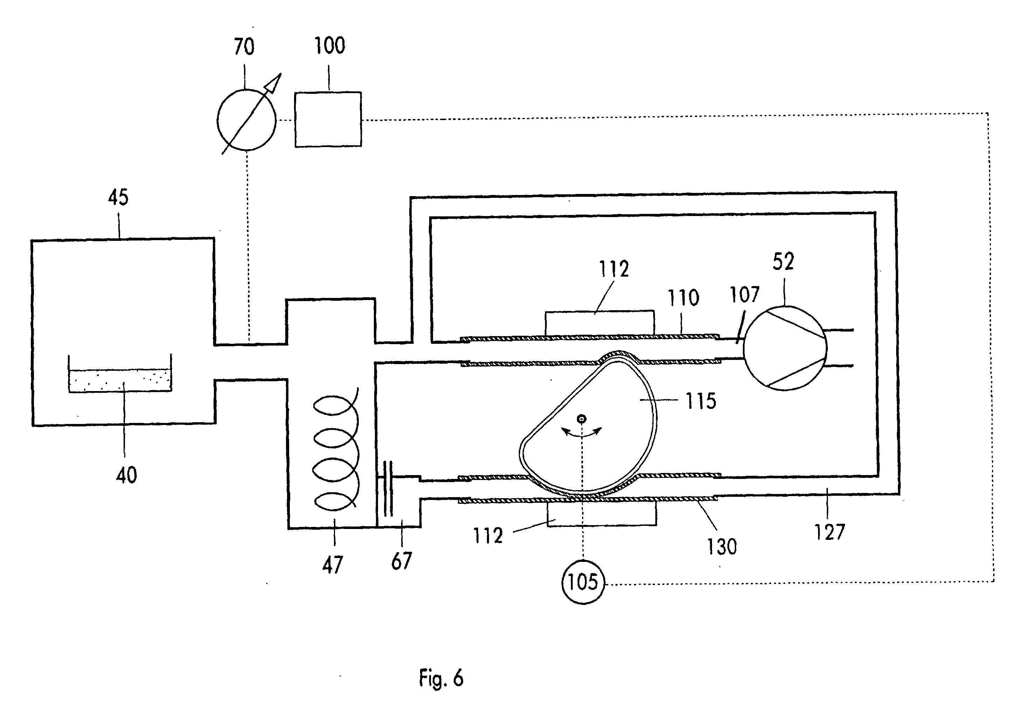

Eine Drucksteuervorrichtung für Anlagen mit wechselnder Dimensionierung, sehr unterschiedlichen Produkten und Produktmengen und nicht festgelegter Vakuumpumpen-Saugleistung ist in den Fig. 5 und 6 dargestellt.

In Fig. 5 ist eine Vorrichtung gezeigt, die analog zu der bezugnehmend auf Fig. 4 beschriebenen Vorrichtung in der Lage ist, die nicht kondensierbaren Gase, eventuell zusammen mit einem von außen zugeführten nicht kondensierbaren Gas, einem sogenannten Ballast-Gas, der Vakuumpumpe 52 zuzuführen, um den gewünschten Druckverlauf zu steuern.

Die in den Fig. 5 und 6 dargestellten Ausführungsbeispiele der vorliegenden Erfindung weisen wie das in Fig. 4 dargestellte Beispiel einen Produktbehälter 40, eine Vakuumkammer 45, eine gekühlte Abscheidevorrichtung 47, eine Vakuumpumpe 52 sowie einen Drucksensor 70 auf. Jedoch ist bei diesen Ausführungsbeispielen der Drucksensor 70 mit einer Steuereinrichtung 100 verbunden, die geeignet ist, um einen Stellmotor 105 zu betätigen.

Nachfolgend wird die in Fig. 5 dargestellte Vorrichtung gemäß der vorliegenden Erfindung näher erläutert. Die Vakuumkammer 45 ist über eine Flußstrecke 107 mit der Vakuumpumpe 52 verbunden. Die Flußstrecke 107 weist einen Abschnitt einer Rohrleitung 110 mit elastischen Rohrleitungswänden, beispielsweise einen elastischen Schlauch, auf. Diese Rohrleitung ist bezüglich einer Steuerscheibe 115 derart angeordnet, daß mittels einer Drehung der Steuerscheibe 115 der Strömungsquerschnitt der Rohrleitung 110 einstellbar ist. Die Steuerscheibe 115 weist eine ursprünglich kreisrunde Form auf, wobei eine Seite derselben abgeflacht ist. Die Steuerscheibe 115 ist mittels des Stellmotors 105, der von der Steuereinrichtung 100 betätigt wird, betätigbar. Dadurch ist es möglich, auf der Basis des durch den Drucksensor gemessenen Drucks 70 über die Steuereinrichtung 100 und den Stellmotor 105 den Strömungsquerschnitt der Rohrleitung 110 einzustellen. Die Steuerscheibe 115 ist mittels eines Auflagers 112 in der ordnungsgemäßen Position bezüglich der Rohrleitung 110 positioniert.

Die in Fig. 5 dargestellte Drucksteuervorrichtung weist ferner eine Belüftungsflußstrecke mit einer Rohrleitung mit elastischer Rohrleitungswand auf. Diese Rohrleitung ist einerseits zwischen der Rohrleitung 110 und der Vakuumpumpe 52 strömungsmäßig mit der Flußstrecke 107 verbunden, und andererseits an dem der Rohrleitung 120 gegenüberliegenden Ende mit der umgebenden Atmosphäre verbunden. Dabei kann die Belüftungsflußstrecke wie beim in Fig. 4 dargestellten Ausführungsbeispiel einen Abscheider 67 zum Ausfällen von Luftfeuchtigkeit, usw., aufweisen.

Dabei sind die zwei Rohrleitungen 110 und 120 sowie die Steuerscheibe 115 derart angeordnet, daß die Steuerscheibe 115 zwischen den Rohrleitungen 110 und 120 angeordnet ist, um zu ermöglichen, daß mittels einer Drehung der abgeflachten Steuerscheibe 115 die Strömungsquerschnitte der Rohrleitungen 110 und 120, und damit die Flußwiderstände derselben, verändert werden. Durch die Formgebung der Steuerscheibe 115 ist es möglich, bei einer entsprechenden Stellung des Stellmotors 105 das benötigte Verhältnis von nicht kondensierbaren Gasen aus dem System, die die Flußstrecke 107 durchlaufen, und nicht kondensierbaren Gasen, oder Ballast-Gasen, aus der umgebenden Atmosphäre, die die Belüftungsflußstrecke 117 durchlaufen, einzustellen.

Beim Anfahren der in Fig. 5 dargestellten Vorrichtung ist die Steuerscheibe 115 derart gedreht, daß die stärkste Abflachung derselben der Rohrleitung 110 zugewandt ist. Daher steht zum Absenken des Drucks in der Vakuumkammer auf den Siede- oder Sublimations-Punktdruck mittels der Vakuumpumpe der volle Strömungsquerschnitt der Rohrleitung 110 und damit der geringste Flußwiderstand zur Verfügung. In dieser Stellung ist der Belüftungsrohrleitung 120 ein Bereich der Steuerscheibe 115 zugewandt, der einem Vollkreis entspricht, weshalb die Rohrleitung 120 bedingt durch die Anordnung der Bauglieder zueinander vollständig verschlossen ist.

Beim Erreichen des Siedepunktdrucks, was durch den Drucksensor 70 erfaßt wird, veranlaßt die Steuereinrichtung 100 den Stellmotor 105, die Steuerscheibe 115 in eine Stellung zu drehen, die den Querschnitt der elastischen Rohrleitung 110 nach Bedarf verringert. Da die elastische Rohrleitung 120 der Belüftungsflußstrecke 117 weiterhin am Vollkreis der Steuerscheibe 115 anliegt, bleibt dieselbe weiterhin verschlossen. Eine solche Stellung der Steuerscheibe 115 mit einem verringerten Strömungsquerschnitt der Rohrleitung 110 und einer verschlossenen Rohrleitung 120 ist in Fig. 5 dargestellt. Erst wenn die Steuerscheibe 115 weitergedreht wird, d.h. der Strömungsquerschnitt der Rohrleitung 110 weiter verringert wird, wird die Rohrleitung 120 der Belüftungsflußstrecke 117 teilweise geöffnet.

Das in Fig. 6 dargestellte Ausführungsbeispiel weist die gleichen Elemente wie das in Fig. 5 dargestellte Ausführungsbeispiel auf, ausgenommen der Steuerscheibe 125 und der Belüftungsflußstrecke 127. Die Steuerscheibe 125 weist einen kleineren Abflachungsbereich auf wie die Scheibe 115 aus Fig. 5. Der Vollkreisbereich der Steuerscheibe 125 umfaßt dabei mehr als einen Halbkreis der Steuerscheibe. Mittels einer derart geformten Steuerscheibe besteht die Möglichkeit, gleichzeitig sowohl die elastische Rohrleitung 110 der Flußstrecke 107 als auch eine elastische Rohrleitung 130 einer Belüftungsflußstrecke 127 geschlossen zu halten. Die Belüftungsflußstrecke 127 ist bei dem in Fig. 6 dargestellten Ausführungsbeispiel an einem Ende zwischen der Rohrleitung 110 und der Vakuumkammer 45 mit der Flußstrecke 107 verbunden. An dem anderen Ende, wobei zwischen dem einen Ende und dem anderen Ende der Belüftungsflußstrecke 127 die elastische Rohrleitung 130 angeordnet ist, ist die Belüftungsflußstrecke 127 mit der umgebenden Atmosphäre verbunden. Auch hier kann die Belüftungsflußstrecke einen Abscheider 67 aufweisen, der thermisch mit dem gekühlten Abscheider 47 der Vakuumkammer 45 gekoppelt ist. Eine derartige Anordnung der Belüftungsflußstrecke 127 wird vorzugsweise dort zum Einsatz kommen, wo nur kleine Leckagen vorhanden sind und/oder eine verhältnismäßig hohe Saugleistung der Vakuumpumpe 52 vorliegt.

Beim Anfahren des Systems ist wiederum der abgeflachte Bereich der Steuerscheibe 125 der elastischen Rohrleitung 110 zugewandt, wodurch dieselbe vollständig geöffnet ist, d.h. ihren größten Strömungsquerschnitt aufweist. Nach dem Erreichen des Siede- oder Sublimations-Punktdrucks, der wiederum durch den Drucksensor 70 erfaßt wird, wird der Strömungsquerschnitt der Rohrleitung 110 mittels der Steuereinrichtung 100 und des Stellmotors 105 nach Bedarf reduziert. Dadurch kann eine rampenförmige Druckabsenkung, wie sie in Fig. 3 dargestellt ist, erreicht werden. Am Ende dieser rampenförmigen Druckabsenkung nimmt die Steuerscheibe 125 die Stellung ein, die in Fig. 6 dargestellt ist. Wird die Steuerscheibe 125 aus dieser Stellung mittels des Stellmotors 105 im Uhrzeigersinn gedreht, ist dies gleichbedeutend mit einer Druckkorrektur nach unten, während eine Drehung derselben gegen den Uhrzeigersinn gleichbedeutend mit einer Druckkorrektur nach oben ist.

In Fig. 7 ist eine Vakuumkammer 200 für eine Destillationsvorrichtung dargestellt, die zur Verwendung mit der vorliegenden Erfindung geeignet ist. Ein Ausgang 205 der Vakuumkammer ist dazu mit einer der Flußstrecken 50, 107 der Drucksteuervorrichtungen der vorliegenden Erfindung verbunden, um die Vakuumkammer 200 mit einer Vakuumpumpe zu verbinden. In der Vakuumkammer ist eine Verdampfungs- und Kondensations-Vorrichtung angeordnet, die eine Verdampfungsfläche 211 und eine Kondensationsfläche 212 aufweist.

Eine derartige Verdampfungs- und Kondensations-Vorrichtung kann beispielsweise mittels einer Mehrzahl von Peltier-Elementen realisiert sein, die eine Verdampfungsfläche mit unterschiedlichen hohen Temperaturniveaus T₁, T₂, T₃, beispielsweise zwischen 30 und 40°C, und eine Kondensationsfläche mit unterschiedlichen tiefen Temperaturniveaus T₄, T₅ und T₆ erzeugen. Die Verdampfungs- und Kondensations-Vorrichtung 210 wird temperaturmäßig mittels einer Steuerung 220 gesteuert. Auf der Verdampfungsfläche 211 ist bei diesem Beispiel eine Mehrzahl von Produktbehältern 225 angeordnet, die zu destillierende Produkte enthalten. Durch das Erwärmen der Verdampfungsfläche 211 werden aus diesen zu destillierenden Produkten Lösungsmittel verdampft, beispielsweise selektiv durch die unterschiedlichen Temperaturniveaus T₁, T₂ und T₃. Alternativ könnte ein zu destillierendes Produkt durch eine weitere Öffnung der Vakuumkammer 200 auf die Verdampfungsfläche 211 aufgebracht werden. Die abgedampften Lösungsmittel kondensieren dann an der Kondensationsfläche 210 und werden in einem Auffangbehälter 230, der vorzugsweise aus der Vakuumkammer 200 entnehmbar ist, in kondensierter Form aufgefangen. Das Verfahren oder die Vorrichtung gemäß der vorliegenden Erfindung können verwendet werden, um in einem solchen System den in Fig. 3 dargestellten Druckverlauf zu erzeugen, um eine optimale Abdampfrate zu erzeugen.

In Anlagen, bei denen sich während des Abdampfprozesses die prozeßbeeinflussenden Bedingungen, beispielsweise die Kühltemperatur, die Produkttemperatur oder die Mischungsverhältnisse im Produkt, usw., stark ändern, kann es sinnvoll sein, die Einstellung des Siede- oder Sublimations-Punktes und der rampenartigen Druckabsenkung im Prozeßverlauf anzupassen. Dazu ist es notwendig, die Schalteinrichtung 73 bzw. die Steuereinrichtung 100 derart auszulegen, daß sie in der Lage ist, einen Siede- oder Sublimations-Punkt automatisch zu finden, wie er den in dem System gerade vorherrschenden Bedingungen entspricht.

Bei einer solchen Auslegung ist es auch bei derartigen Anlagen möglich, das Ziel der jeweils größtmöglichen Abdampfrate zu erreichen. Dazu ist es lediglich nötig, in gewissen Zeitabständen oder beim Absinken der Abdampfrate, falls dieselbe aus den Meßwerten des Drucksensors und in der Vakuumkammer enthaltener Temperatursensoren, bestimmbar ist, eine kontrollierte Zufuhr von nicht kondensierbarem Gas ("Ballast"-Gas) in die Anlage zuzulassen.

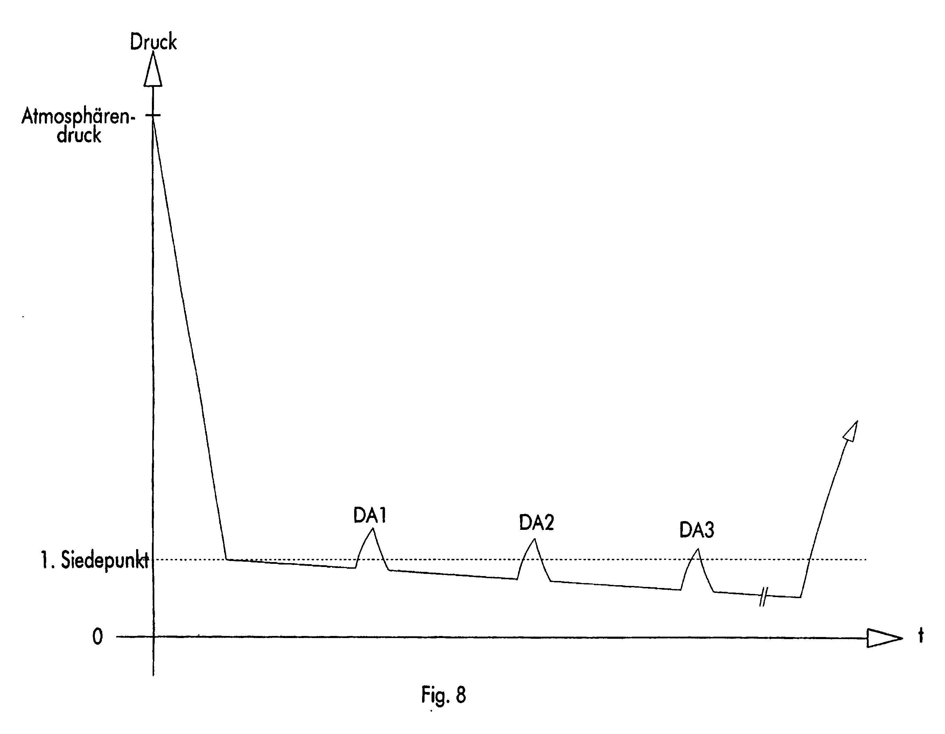

Der sich damit ergebende Druckverlauf ist in Fig. 8 dargestellt. Bei dem in Fig. 8 dargestellten Druckverlauf stellen die Spitzen DA1, DA2 und DA3 jeweils eine kontrollierte Zufuhr von nicht kondensierbarem Gas und die damit verbundene Druckzunahme dar. Der kurzzeitige Druckanstieg und die entsprechende Unterbrechung des Abdampfvorganges ermöglichen es, daß die Schalteinrichtung 73 bzw. die Steuereinrichtung 100 den Siedepunkt, der den geänderten Bedingungen entspricht, neu findet. Dies ist beispielsweise mittels eines Mikroprozessor-Reglers realisierbar.

Bei einer weiteren Ausgestaltung der Vorrichtung gemäß der vorliegenden Erfindung kann die ermittelte Abdampfrate, falls diese aus den Meßwerten bestimmbar ist, dazu benutzt werden, die Parameter der rampenförmigen Druckabsenkung, siehe den Bereich "rampenförmiger Druckverlauf" in Fig. 3, hinsichtlich der Zeit und/oder der Steilheit automatisch anzupassen.

Zusätzlich besteht bei allen beschriebenen Ausführungsbeispielen die Möglichkeit, die Vakuumpumpe in bestimmten Grenzen über die Frequenz zu regeln, um die Saugleistung derselben im wesentlichen an den jeweiligen Bedarf anzupassen.

## Patentansprüche

1. Vorrichtung zum Steuern des Drucks in einer Vakuumkammer (45; 200) einer Destillations- oder Sublimations-Vorrichtung mit folgenden Merkmalen:
einer Vakuumpumpe (52);
einer Flußstrecke (107) zwischen der Vakuumkammer (45; 200) und der Vakuumpumpe (52), deren Flußwiderstand stufenlos einstellbar ist;
einem Drucksensor (70) zum Messen des Drucks in der Vakuumkammer;
einer Belüftungseinrichtung (117; 127), die eine Belüftungsflußstrecke (120; 130) mit einem einstellbaren Flußwiderstand aufweist, um durch das Zuführen eines nicht kondensierbaren Gases den Druck in der Druckkammer (45; 200) zu erhöhen; und
einer Einrichtung (100, 105, 112, 115; 125) zum Einstellen des Flußwiderstands der Flußstrecke (107) zwischen der Vakuumkammer (45; 200) und der Vakuumpumpe (52) abhängig von dem von dem Drucksensor (70) erfaßten Druck, derart, daß der Druck in der Vakuumkammer (45; 200) bis zum Erreichen eines Siede- oder Sublimations-Punktdrucks des Produkts mit einer ersten Druckabsenkrate abfällt, und daß der Druck nach dem Erreichen des Siede- oder Sublimations-Punktdrucks des Produkts mit einer zweiten gegenüber der ersten Druckabsenkrate geringen Druckabsenkrate abfällt, wobei durch die zweite Druckabsenkrate ein im wesentlichen rampenartig abfallender Druckverlauf in der Druckkammer erzeugt wird,
**dadurch gekennzeichnet, daß**
die Einrichtung zum Einstellen des Flußwiderstands der Flußstrecke (107) zwischen der Vakuumkammer (45; 200) und der Vakuumpumpe (52) eine Steuerscheibe (115; 125) aufweist, und daß die Belüftungsflußstrecke (120; 130), die Flußstrecke (107) zwischen der Vakuumkammer (45; 200) und der Vakuumpumpe (52) und die Steuerscheibe (115; 125) derart angeordnet sind, daß durch eine Drehung der Steuerscheibe (115; 125) die Einstellung der Flußwiderstände beider Flußstrecken möglich ist.

2. Vorrichtung gemäß Anspruch 1, bei der die Belüftungseinrichtung (117; 127) strömungsmäßig vor der Belüftungsflußstrecke (120; 130) mit dem einstellbaren Flußwiderstand einen Abscheider (67) aufweist, der thermisch mit einem gekühlten Abscheider (47) der Destillations- oder Sublimations-Vorrichtung gekoppelt ist.

3. Vorrichtung gemäß Anspruch 1 oder 2, bei der die Belüftungseinrichtung (117) strömungsmäßig hinter der Belüftungsflußstrecke (120) mit dem einstellbaren Flußwiderstand zwischen der Vakuumpumpe (52) und dem stufenlos einstellbaren Flußwiderstand (110) der Flußstrecke (107) zwischen der Vakuumkammer (45; 200) und der Vakuumpumpe (52) mit der Flußstrecke (107) verbunden ist.

4. Vorrichtung gemäß Anspruch 1 oder 2, bei der die Belüftungseinrichtung (127) strömungsmäßig hinter der Belüftungsflußstrecke (120) mit dem einstellbaren Flußwiderstand zwischen der Vakuumkammer (45; 200) und dem stufenlos einstellbaren Flußwiderstand (110) der Flußstrecke (107) zwischen der Vakuumkammer (45; 200) und der Vakuumpumpe (52) mit der Flußstrecke (107) verbunden ist.

5. Vorrichtung gemäß einem der Ansprüche 1 bis 4, bei der die Flußstrecke (107) zwischen der Vakuumkammer (45; 200) und der Vakuumpumpe (52) eine Rohrleitung (110) mit einer elastischen Rohrleitungswand aufweist, derart, daß mittels eines Drucks, der auf die flexible Rohrleitungswand ausgeübt wird, der Strömungsquerschnitt der Rohrleitung (110) einstellbar ist.

6. Vorrichtung gemäß Anspruch 5, bei der die Steuerscheibe (115; 125) die Form eines auf einer Seite abgeflachten Kreises besitzt, auf einem Auflager (112) angebracht ist und mittels eines Stellmotors (105) drehbar ist, wobei die Steuerscheibe (115; 125) und die Rohrleitung (110) der Flußstrecke (107) derart angeordnet sind, daß die Rohrleitung (110) einen maximalen Strömungsquerschnitt aufweist, wenn ihr die abgeflachte Seite der Steuerscheibe (115; 125) zugewandt ist, daß die Rohrleitung (110) vollständig geschlossen ist, wenn ihr die nicht abgeflachte Seite der Steuerscheibe (115; 125) zugewandt ist, und daß durch ein Drehen der Steuerscheibe (115; 125) zwischen diesen zwei Stellungen beliebige Strömungsquerschnitte der Rohrleitung (110) zwischen dem maximalen Strömungsquerschnitt und dem vollständigen Verschluß einstellbar sind.

7. Vorrichtung gemäß Anspruch 6, bei der die Belüftungseinrichtung (117; 127) eine Rohrleitung (120; 130) mit einer elastischen Rohrleitungswand aufweist, derart, daß mittels eines Drucks, der auf die elastische Rohrleitungswand ausgeübt wird, der Strömungsquerschnitt der Rohrleitung (120; 130) einstellbar ist.

8. Vorrichtung gemäß Anspruch 7, bei der die Rohrleitung (120; 130) der Belüftungseinrichtung (117; 127), die Rohrleitung (110) der Flußstrecke (107) und die Steuerscheibe (115; 125) derart angeordnet sind, daß dadurch die Einstellung der Flußwiderstände der beiden Rohrleitungen (110, 120; 130) mittels der Drehung der Steuerscheibe möglich ist.

9. Vorrichtung gemäß Anspruch 8, bei der der Abflachungsbereich der Steuerscheibe (125) derart ausgebildet ist, daß die Steuerscheibe (125) eine Stellung aufweist, in der beide Rohrleitungen (110, 120; 130) geschlossen sind.

10. Vorrichtung gemäß einem der Ansprüche 1 bis 9, bei der die Vakuumkammer (200) Teil einer Vorrichtung zum Abdampfen eines Lösungsmittels aus einem zu destillierenden Produkt an einer Verdampfungsfläche (211) und zum Kondensieren des abgedampften Lösungsmittels an einer Kondensationsfläche (212) ist, wobei die Verdampfungsfläche (211) und die Kondensationsfläche (212) in der Vakuumkammer (45; 200) angeordnet sind.

## Claims

1. Apparatus for controlling the pressure in a vacuum chamber (45; 200) of a distillation or sublimation device, the apparatus comprising:
a vacuum pump (52);
a flow path (107) between the vacuum chamber (45; 200) and the vacuum pump (52), the flow resistance of which is continuously adjustable;
a pressure sensor (70) for measuring the pressure in the vacuum chamber;
venting means (117; 127) comprising a venting flow path (120; 130) having an adjustable flow resistance so as to increase the pressure in the pressure chamber (45; 200) by supplying a non-condensable gas; and
means (100, 105, 112, 115; 125) for adjusting the flow resistance of the flow path (107) between the vacuum chamber (45; 200) and the vacuum pump (52) depending on the pressure sensed by the pressure sensor (70), such that the pressure in the vacuum chamber (45; 200) decreases at a first pressure reduction rate until a boiling or sublimation point pressure of the product is reached, and such that after the boiling or sublimation point pressure of the product has been reached, the pressure decreases at a second pressure reduction rate which is smaller than a first pressure reduction rate, a pressure behavior which decreases in an essentially ramp-like manner being generated in the pressure chamber by the second pressure reduction rate,
**characterized in that**
the means for adjusting the flow resistance of the flow path (107) between the vacuum chamber (45; 200) and the vacuum pump (52) comprise a control disk (115; 125), and **in that** the venting flow path (120; 130), the flow path (107) between the vacuum chamber (45; 200) and the vacuum pump (52), and the control disk (115; 125) are disposed such that the adjustment of the flow resistances of both flow paths is made possible by turning the control disk (115; 125).

2. Apparatus as claimed in claim 1, wherein the venting means (117; 127) comprises a separator (67) upstream of the venting flow path (120; 130) having the adjustable flow resistance, which separator (67) is thermally coupled to a cooled separator (47) of the distillation or sublimation device.

3. Apparatus as claimed in claim 1 or 2, wherein the venting means (117) is connected, downstream of the venting flow path (120) having the adjustable flow resistance, to the flow path (107) between the vacuum pump (52) and the continuously adjustable flow resistance (110) of the flow path (107) between the vacuum chamber (45; 200) and the vacuum pump (52).

4. Apparatus as claimed in claim 1 or 2, wherein the venting means (127) is connected, downstream of the venting flow path (120) having the adjustable flow resistance, to the flow path (107) between the vacuum chamber (45; 200) and the continuously adjustable flow resistance (110) of the flow path (107) between the vacuum chamber (45; 200) and the vacuum pump (52).

5. Apparatus as claimed in any one of claims 1 to 4, wherein between the vacuum chamber (45; 200) and the vacuum pump (52), the flow path (107) comprises a conduit (110) having a resilient conduit wall, such that the flow cross-section of the conduit (110) is adjustable by means of a pressure exerted on the resilient conduit wall.

6. Apparatus as claimed in claim 5, wherein the control disk (115; 125) has the shape of a circle flattened on one side, is mounted on a bearing (112) and is rotatable by means of a servomotor (105), the control disk (115; 125) and the conduit (110) of the flow path (107) being arranged such that the conduit (110) has a maximum flow cross-section if faced by the flattened side of the control disk (115; 125), that the conduit (110) is completely closed if faced by the non-flattened side of the control disk (115; 125), and that by rotating the control disk (115; 125) between these two positions, flow cross-sections of the conduit (110) are adjustable between the maximum flow cross-section and complete closure.

7. Apparatus as claimed in claim 6, wherein the venting means (117; 127) comprise a conduit (120; 130) having a resilient conduit wall such that the flow cross-section of the conduit (120; 130) is adjustable by means of a pressure exerted on the resilient conduit wall.

8. Apparatus as claimed in claim 7, wherein the conduit (120; 130) of the venting means (117; 127), the conduit (110) of the flow path (107), and the control disk (115; 125) are arranged such that the adjustment of the flow resistances of the two conduits (110; 120; 130) is thereby made possible by means of the rotation of the control disk.

9. Apparatus as claimed in claim 8, wherein the flattened area of the control disk (125) is configured such that the control disk (125) has a position in which both conduits (110,120; 130) are closed.

10. Apparatus as claimed in any one of claims 1 to 9, wherein the vacuum chamber (200) is part of an apparatus for evaporating a solvent from a product to be distilled at an evaporation area (211) and for condensing the evaporated solvent at a condensation area (212), the evaporation area (211) and the condensation area (212) being arranged in the vacuum chamber (45; 200).

## Revendications

1. Dispositif pour contrôler la pression dans une chambre à vide (45 ; 200) d'un dispositif de distillation ou de sublimation avec les caractéristiques suivantes :
une pompe à vide (52) ;
un tronçon (107) entre la chambre à vide (45 ; 200) et la pompe à vide (52), dont la résistance est réglable en continu ;
un capteur de pression (70) pour mesurer la pression dans la chambre à vide ;
un dispositif d'aération (117 ; 127) comprenant un tronçon d'aération (120 ; 130) avec une résistance réglable pour augmenter la pression dans la chambre à vide (45 ; 200) en introduisant un gaz non condensable ; et
un dispositif (100, 105, 112, 115 ; 125) pour régler la résistance du tronçon (107) entre la chambre à vide (45 ; 200) et la pompe à vide (52) en fonction de la pression mesurée par le capteur de pression (70), de telle manière que la pression dans la chambre à vide (45 ; 200) chute avec un premier taux de chute de pression jusqu'à ce qu'une pression correspondant au point d'ébullition ou de sublimation du produit soit atteinte et que la pression, après avoir atteint la pression correspondant au point d'ébullition ou de sublimation du produit, chute avec un deuxième taux de chute de pression inférieur au premier taux de chute de pression, le deuxième taux de chute de pression générant dans la chambre à vide un gradient de pression en chute essentiellement linéaire,
**caractérisé en ce que**
le dispositif pour régler la résistance du tronçon (107) entre la chambre à vide (45 ; 200) et la pompe à vide (52) comprend un disque de commande (115; 125) et **en ce que** le tronçon d'aération (120 ; 130), le tronçon (107) entre la chambre à vide (45 ; 200) et la pompe à vide (52) et le disque de commande (115 ; 125) sont disposés de telle manière qu'une rotation du disque de commande (115 ; 125) permet de régler les résistances des deux tronçons.

2. Dispositif selon la revendication 1, dans lequel le dispositif d'aération comprend en amont du tronçon d'aération (120 ; 130) avec la résistance réglable un séparateur (67) couplé thermiquement avec un séparateur refroidi (47) du dispositif de distillation et de sublimation.

3. Dispositif selon la revendication 1 ou 2, dans lequel le dispositif d'aération (117), en aval du tronçon d'aération (120) avec la résistance réglable entre la pompe à vide (52) et la résistance réglable en continu (110) du tronçon (107) entre la chambre à vide (45 ; 200) et la pompe à vide (52), est relié au tronçon (107).

4. Dispositif selon la revendication 1 ou 2, dans lequel le dispositif d'aération (127), en aval du tronçon d'aération (120) avec la résistance réglable entre la chambre à vide (45 ; 200) et la résistance réglable en continu (110) du tronçon (107) entre la chambre à vide (45 ; 200) et la pompe à vide (52), est relié au tronçon (107).

5. Dispositif selon l'une des revendications 1 à 4, dans lequel le tronçon (107) entre la chambre à vide (45 ; 200) et la pompe à vide (52) comprend une conduite (110) avec une paroi de conduite élastique, de telle manière qu'une pression exercée sur la paroi de conduite élastique permet de régler la section d'écoulement de la conduite (110).

6. Dispositif selon la revendication 5, dans lequel le disque de commande (115 ; 125) possède la forme d'un cercle aplati sur un côté, est monté sur un support (112) et peut tourner grâce à un servomoteur (105), le disque de commande (115 ; 125) et la conduite (110) du tronçon (107) étant disposés de telle manière que la conduite (110) présente une section d'écoulement maximale lorsque le côté aplati du disque de commande (115 ; 125) est toumé vers elle, que la conduite (110) est totalement fermée lorsque le côté non aplati du disque de commande (115 ; 125) est tourné vers elle et qu'une rotation du disque de commande (115 ; 125) entre ces deux positions permet de régler toutes sections d'écoulement de la conduite (110) entre la section d'écoulement maximale et la fermeture totale.

7. Dispositif selon la revendication 6, dans lequel le dispositif d'aération (117 ; 127) comprend une conduite (120 ; 130) avec une paroi de conduite élastique, de telle manière qu'une pression exercée sur la paroi de conduite élastique permet de régler la section d'écoulement de la conduite (120 ; 130).

8. Dispositif selon la revendication 7, dans lequel la conduite (120 ; 130) du dispositif d'aération (117 ; 127), la conduite (110) du tronçon (107) et le disque de commande (115 ; 125) sont disposés de manière à permettre le réglage des résistances des deux conduites (110, 120 ; 130) par la rotation du disque de commande.

9. Dispositif selon la revendication 8, dans lequel la partie aplatie du disque de commande (125) est réalisée de telle manière que le disque de commande (125) comprend une position dans laquelle les deux conduites (110, 120 ; 130) sont fermées.

10. Dispositif selon l'une des revendications 1 à 9, dans lequel la chambre à vide (200) fait partie d'un dispositif destiné à évaporer un solvant contenu dans un produit à distiller sur une surface d'évaporation (211) et à condenser le solvant évaporé sur une surface de condensation (212), la surface d'évaporation (211) et la surface de condensation (212) étant disposées dans la chambre à vide (45 ; 200).
